# EUROPEAN PATENT SPECIFICATION

(11) **EP 3 429 039 B1**
(45) Date of publication and mention of the grant of the patent: **09.09.2020**
(21) Application number: 17181329.8
(22) Date of filing: 14.07.2017
(51) Int. Cl.: H02B 1/052

(54) **CLAMPING MECHANISM FOR A RAIL MOUNTED DEVICE**
KLEMMVORRICHTUNG FÜR EIN REIHENEINBAUGERÄT
MÉCANISME DE SERRAGE POUR APPAREIL À MONTER EN RANGÉE

(43) Date of publication of application: 16.01.2019
(73) Proprietor: Moxa Inc., New Taipei City 231 (TW)
(72) Inventor: HUANG, Yi-Chun, 231 New Taipei City (TW)
(74) Representative: Straus, Alexander

(56) References cited:
- WO-A1-2004/114466

## Description

### BACKGROUND OF THE INVENTION

### 1. Field of the Invention

The present disclosure relates to a clamping mechanism, more particularly to a clamping mechanism which is able to clamp an industrial input/output device on a DIN rail or unloading the industrial input/output device from the DIN rail by simultaneous actions between mechanism elements.

### 2. Description of the Related Art

German standardization institute defines a standard stamped metal rail which is called a DIN rail, and the DIN rail is generally used to secure an industrial input/output device.

In order to secure the industrial input/output device on the DIN rail, a clamping mechanism must be used to clamp the industrial input/output device. There are different available clamping mechanisms in market.

For example, U.S. issued patent, No.6431909, discloses a detachable securement apparatus for a mounting rail. The mounting rail has first and second mounting flanges extending lengthwise along opposite sides of a support section. The apparatus has a body, a securement assembly and a release assembly. Extending from the body, the securement assembly has first and second interface members each including a contact region configured to exert a holding force on the first and second mounting flanges, respectively. The release assembly is configured for removing the holding force on both the first and second mounting flanges to allow vertical removal of the body. The release assembly has an engagement member coupled to the body and to the first and second interface members, and is engagable on a side of the body.

However, according to the technology disclosed by U.S. issued patent No.6431909, external tools are required to secure the industrial input/output device on the DIN rail; generally, the DIN rail may have insufficient space for securing the industrial input/output device, so the manner of using the external tools to secure the industrial input/output device on the DIN rail has a problem of inconvenient operation.

WO 2004/114466 A1 teaches a detachable securement apparatus for a mounting rail, wherein the mounting rail has first and second mounting flanges extending lengthwise along opposite sides of a support section. The apparatus has a body, a securement assembly and a release assembly. Extending from the body, the securement assembly has first and second interface members each including a contact region configured to exert a holding force on the first and second mounting flanges, respectively. The release assembly is configured for removing the holding force on both the first and second mounting flanges to allow vertical removal of the body. The release assembly has an engagement member coupled to the body and to the first and second interface members, and is engagable on a side of the body. A method of attachment and detachment with flanges of a rail mount assembly includes springably coupling first and second sides of a conductive mounting member to the first and second flange, laterally engaging a release actuator coupled to the mounting members, and simultaneously releasing the first and second sides of the mounting member from the flanges.

To summarize, the conventional technology has the problem that the industrial input/output device cannot be secured on the DIN rail conveniently. Therefore, what is need is to develop a clamping device to solve the problem.

### SUMMARY OF THE INVENTION

In order to solve the conventional problem of how to conveniently secure the industrial input/output device on the DIN rail, the present disclosure is to provide a clamping mechanism for the industrial input/output device, as defined in independent claims 1 and 6.

According to a first embodiment mode, the present disclosure provides a clamping mechanism for an industrial input/output device, and the clamping mechanism includes a shell member, an operating link, a first clamping rod, an elastic element, a rotary rod and a second clamping rod.

The shell member includes a sliding track disposed at a top side thereof and a mechanism assembly receiving space formed at a rear side thereof, and the sliding track includes a first sliding track end and a second sliding track end. The operating link includes a pivot pin, a rod sliding slot, a first operating part and a second operating part, and is slidably and rotatably disposed on the sliding track through the pivot pin. The first operating part and the second operating part are exposed out of the shell member, and the rod sliding slot includes a first sliding slot end and a second sliding slot end. The first clamping rod is disposed in the mechanism assembly receiving space, and includes a first driving part, an elastic element mounting part, a first clamping part and a second driving part. The first driving part is disposed in the rod sliding slot and slidable relative to the rod sliding slot, and a part of the first clamping part is exposed out of the shell member. The elastic element is secured in the mechanism assembly receiving space by the elastic element mounting part. The rotary rod is pivotally disposed in the mechanism assembly receiving space, and comprising a first rotary driving part and a second rotary driving part, and the second driving part is assembled with the first rotary driving part. The second clamping rod is disposed in the mechanism assembly receiving space, and includes a third driving part and a second clamping part. The third driving part is assembled with the second rotary driving part, and a part of the second clamping part is exposed out of the shell member.

According to a second embodiment mode, the present disclosure provides a clamping mechanism for an industrial input/output device, and the clamping mechanism includes a shell member, a first operating link, a second operating link, a first clamping rod, an elastic element, a rotary rod and a second clamping rod. The shell member includes a sliding track disposed at a top side thereof, and a mechanism assembly receiving space formed at a rear side thereof. The first operating link is disposed in the sliding track and slidable relative to the sliding track, and includes a first operating part exposed out of the shell member. The second operating link includes a second operating part exposed out of the shell member, and the second operating link pivotally disposed with the top side of the shell member. The first clamping rod is disposed in the mechanism assembly receiving space, and includes a first driving part, an elastic element mounting part, a first clamping part and a second driving part. The first driving part is pivotally connected to the second operating link. The first driving part can be driven to move by the second operating link, and a part of the first clamping part is exposed out of the shell member. The elastic element is secured in the mechanism assembly receiving space by the elastic element mounting part. The rotary rod pivotally is disposed in the mechanism assembly receiving space, and includes a first rotary driving part and a second rotary driving part. The second driving part is assembled with the first rotary driving part. The second clamping rod is disposed in the mechanism assembly receiving space, and includes a third driving part and a second clamping part. The third driving part is assembled with the second rotary driving part, and a part of the second clamping part is exposed out of the shell member.

According to description above, the difference between the present disclosure and the conventional technology is that the operating link of the clamping mechanism of the present disclosure can be slid and rotated to drive links of the mechanism elements disposed inside the shell member to act simultaneously, thereby clamping the industrial input/output device on the DIN rail or unloading the industrial input/output device from the DIN rail conveniently and fast.

Therefore, the technical means of the present disclosure can achieve the technical effect of clamping the industrial input/output device on the DIN rail or unloading the industrial input/output device from the DIN rail fast and conveniently.

### BRIEF DESCRIPTION OF THE DRAWINGS

The structure, operating principle and effects of the present disclosure will be described in detail by way of various embodiments which are illustrated in the accompanying drawings.
FIG. 1 is a plan view of the interior of a shell member of a clamping mechanism for an industrial input/output device, in accordance with a first embodiment mode of the present disclosure.
FIG. 2 is a plan view of a mechanism assembly of the clamping mechanism for the industrial input/output device, in accordance with the first embodiment mode of the present disclosure.
FIGs. 3A, 3B and 3C are plan views showing a process of operating the clamping mechanism for the industrial input/output device, in accordance with the first embodiment mode of the present disclosure.
FIG. 4 is a plan view of the interior of a shell member of a clamping mechanism for an industrial input/output device, in accordance with a second embodiment mode of the present disclosure.
FIG. 5 is a plan view of a mechanism assembly of the clamping mechanism for the industrial input/output device, in accordance with the second embodiment mode of the present disclosure.
FIGs. 6A-6C are plan views showing a process of operating the clamping mechanism for the industrial input/output device, in accordance with the second embodiment mode of the present disclosure.

### DETAILED DESCRIPTION OF THE PREFERRED EMBODIMENTS

The following embodiments of the present invention are herein described in detail with reference to the accompanying drawings. These drawings show specific examples of the embodiments of the present invention. It is to be understood that these embodiments are exemplary implementations and are not to be construed as limiting the scope of the present invention in any way. Further modifications to the disclosed embodiments, as well as other embodiments, are also included within the scope of the appended claims. These embodiments are provided so that this disclosure is thorough and complete, and fully conveys the inventive concept to those skilled in the art. Regarding the drawings, the relative proportions and ratios of elements in the drawings may be exaggerated or diminished in size for the sake of clarity and convenience. Such arbitrary proportions are only illustrative and not limiting in any way. The same reference numbers are used in the drawings and description to refer to the same or like parts.

It is to be understood that, although the terms 'first', 'second', 'third', and so on, may be used herein to describe various elements, these elements should not be limited by these terms. These terms are used only for the purpose of distinguishing one component from another component. Thus, a first element discussed herein could be termed a second element without altering the description of the present invention. As used herein, the term "or" includes any and all combinations of one or more of the associated listed items.

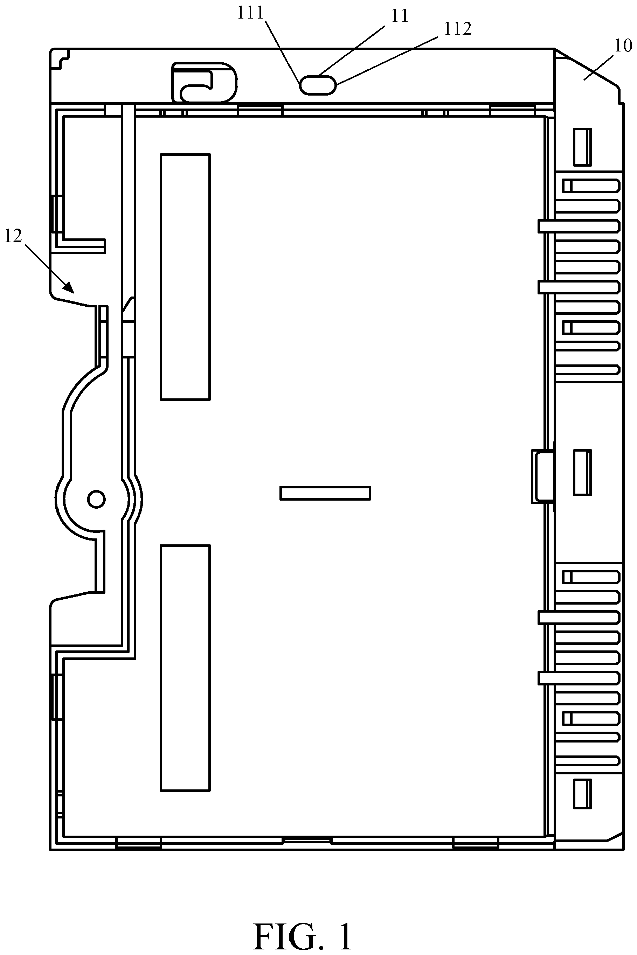

Please refer to FIG. 1, which is a plan view of the interior of a shell member of a clamping mechanism for an industrial input/output device, in accordance with a first embodiment mode of the present disclosure.

The shell member 10 includes a sliding track 11 disposed at a top side thereof and a mechanism assembly receiving space formed at a rear side thereof. The sliding track 11 includes a first sliding track end 111 and a second sliding track end 112.

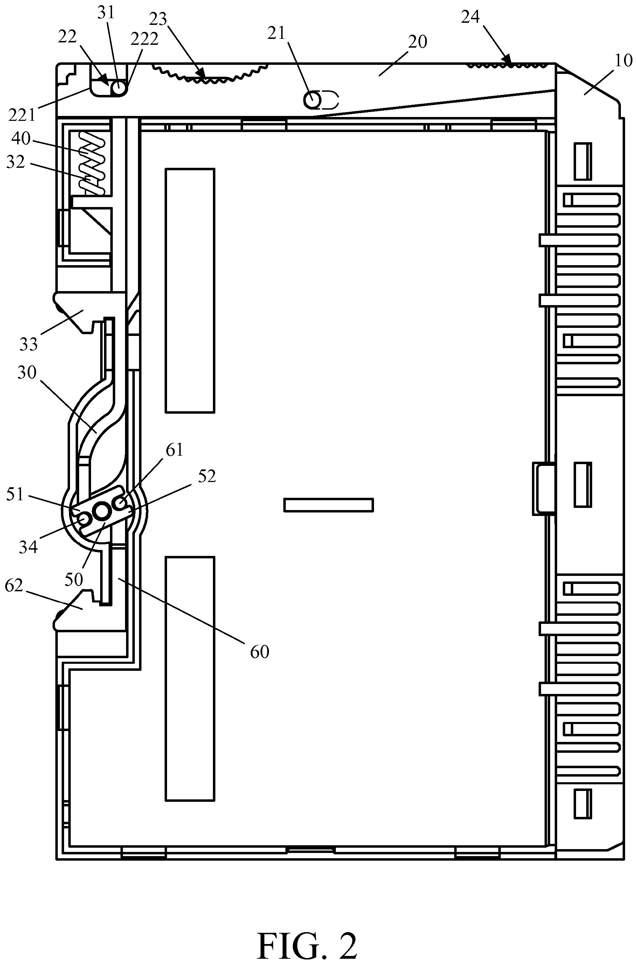

Please refer to FIG. 2, which is a plan view of a mechanism assembly of the clamping mechanism for the industrial input/output device, in accordance with the first embodiment mode of the present disclosure.

As shown in FIG. 2, an operating link 20 includes a pivot pin 21, a rod sliding slot 22, a first operating part 23 and a second operating part 24. The operating link 20 is disposed in the sliding track 11 of the shell member 10 by the pivot pin 21, and is slidable and rotatable relative to the sliding track 11 of the shell member 10. The first operating part 23 and the second operating part 24 are exposed out of the shell member 10. The rod sliding slot 22 includes a first sliding slot end 221 and a second sliding slot end 222.

It should be noted that the first operating part 23 of the operating link 20 has a surface in a wave shape to increase friction thereof, so that the first operating part 23 of the operating link 20 may be operated more easily.

A first clamping rod 30 is disposed in the mechanism assembly receiving space 12 of the shell member 10, and includes a first driving part 31, an elastic element mounting part 32, a first clamping part 33 and a second driving part 34. The first driving part 31 of the first clamping rod 30 is disposed in the rod sliding slot 22 of the operating link 20, so that the first driving part 31 of the first clamping rod 30 is slidable relative to the rod sliding slot 22 of the operating link 20. A part of the first clamping part 33 of the first clamping rod 30 is exposed out of the shell member 10, and the exposed part of the first clamping part 33 is configured to clamp the industrial input/output device on the DIN rail.

The elastic element mounting part 32 of the first clamping rod 30 is configured to secure an elastic element 40 in the mechanism assembly receiving space 12 of the shell member 10, and the elastic element 40 is configured to provide a clamping force to enable the first clamping rod 30 to clamp the industrial input/output device on the DIN rail.

A rotary rod 50 is pivotally disposed in the mechanism assembly receiving space 12 of the shell member 10, and includes a first rotary driving part 51 and a second rotary driving part 52. The second driving part 34 of the first clamping rod 30 is assembled with the first rotary driving part 51 of the rotary rod 50, so that the rotary rod 50 may be driven to rotate by movement of the first clamping rod 30.

A second clamping rod 60 is disposed in the mechanism assembly receiving space 12 of the shell member 10, and includes a third driving part 61 and a second clamping part 62. The third driving part 61 of the second clamping rod 60 is assembled with the second rotary driving part 52 of the rotary rod 50, so that the second clamping rod 60 may be driven to move by rotation of the rotary rod 50. A part of the second clamping part 62 of the second clamping rod 60 is exposed out of the shell member 10, and the exposed part of the second clamping part 62 is used to clamp the industrial input/output device on the DIN rail.

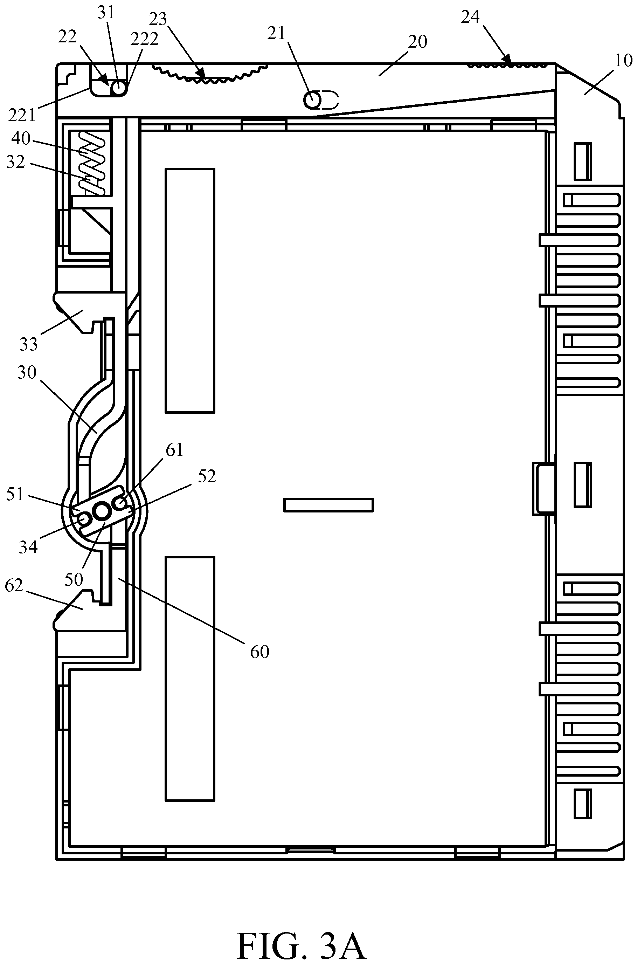

Please refer to FIGs. 3A through 3C, which are plan views showing a process of operating the clamping mechanism for the industrial input/output device, in accordance with the first embodiment mode of the present disclosure.

FIG. 3A shows a default state of the clamping mechanism for the industrial input/output device. In the default state, the pivot pin 21 of the operating link 20 is located at the first sliding track end 111 of the sliding track 11, and the first driving part 31 of the first clamping rod 30 is located at the second sliding slot end 222 of the rod sliding slot 22, and at this time, the operating link 20 is unable to rotate relative to the shell member 10, and the first clamping part 33 of the first clamping rod 30 is forced by the downward elastic force of the elastic element 40 to expose the part thereof out of the shell member 10, and the second clamping part 62 of the second clamping rod 60 acts simultaneously with the first clamping part 33 of the first clamping rod 30 to expose the part thereof out of the shell member 10, so that the downward elastic force of the elastic element 40 enables the first clamping part 33 of the first clamping rod 30 and the second clamping part 62 of the second clamping rod 60 to clamp the industrial input/output device on the DIN rail.

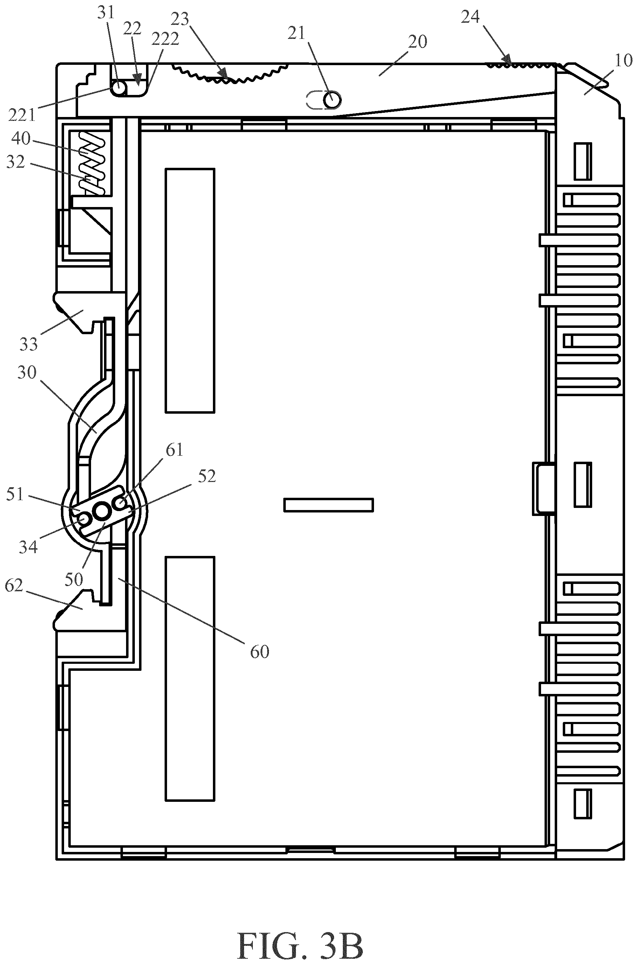

In order to clamp the industrial input/output device on the DIN rail or unload the industrial input/output device from the DIN rail, the first operating part 23 of the operating link 20 can be operated to push or pull the operating link 20 out of the shell member 10, as shown in FIG. 3B; and at this time, the pivot pin 21 of the operating link 20 is also moved to the second sliding track end 112 of the sliding track 11 and the first driving part 31 of the first clamping rod 30 is moved to the first sliding slot end 221 of the rod sliding slot 22, thereby making the operating link 20 rotatable relative to the shell member 10.

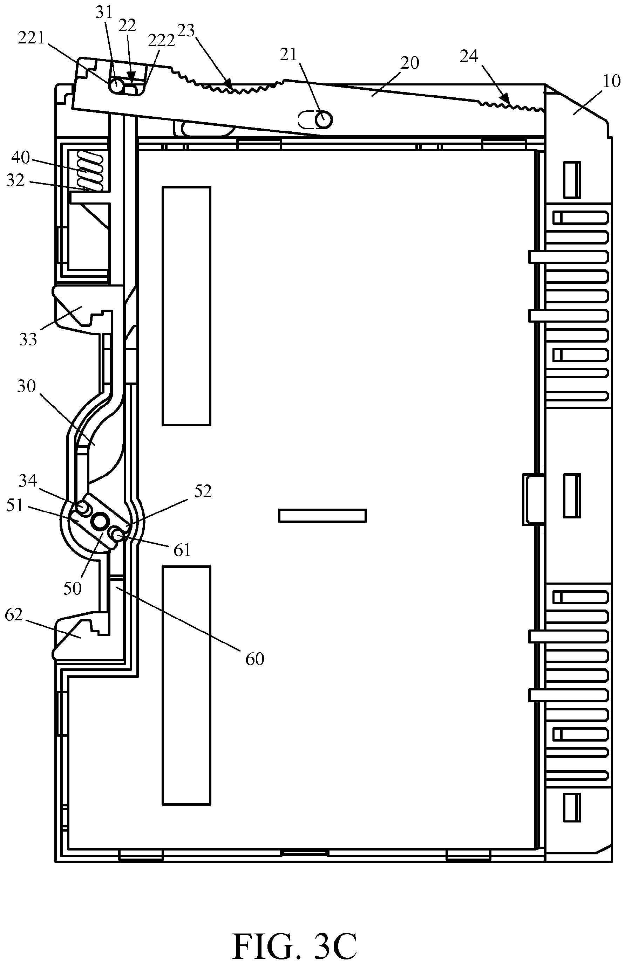

Next, as shown in FIG. 3C, the second operating part 24 of the operating link 20 can be pressed down to rotate the operating link 20 clockwise relative to the shell member 10, so that the first clamping rod 30 is driven by the first driving part 31 of the first clamping rod 30 to move upwardly and the first clamping part 33 of the first clamping rod 30 is also upwardly moved into the shell member 10. By upwardly moving the second driving part 34 of the first clamping rod 30 to clockwise rotate the rotary rod 30, the second clamping rod 60 can be moved downwardly to drive the second clamping part 62 of the second clamping rod 60 to move into the shell member 10, so that the industrial input/output device can be clamped on the DIN rail or unloaded from the DIN rail.

After the second operating part 24 of the operating link 20 is stopped pressing down, the downward elastic force of the elastic element 40 can push the first clamping rod 30 to move downwardly, to expose the part of the first clamping part 33 of the first clamping rod 30 out of the shell member 10; next, the first driving part 31 of the first clamping rod 30 can be moved downwardly to drive the operating link 20 to counter-clockwise rotate, and the second driving part 34 of the first clamping rod 30 can be moved downwardly to drive the rotary rod 30 to counter-clockwise rotate, so as to drive the second clamping rod 60 to move upwardly to expose the part of the second clamping part 62 out of the shell member 10. As a result, while be exerted by the downward elastic force of the elastic element 40, the first clamping part 33 of the first clamping rod 30 and the second clamping part 62 of the second clamping rod 60 can clamp the industrial input/output device on the DIN rail, as shown in FIG. 3B.

Next, the first operating part 23 of the operating link 20 is operated to push the operating link 20 into the shell member 10, and at this time, the pivot pin 21 of the operating link 20 is moved to the first sliding track end 111 of the sliding track 11, and the first driving part 31 of the first clamping rod 30 is moved to the second sliding slot end 222 of the rod sliding slot 22, so that the operating link 20 is unable to rotate relative to the shell member 10.

Preferably, the shell member 10, the operating link 20, the first clamping rod 30, the elastic element 40, the rotary rod 50 and the second clamping rod 60 are made of metal material or polymer material; for example, the metal material may be iron, steel or aluminum alloy, the polymer material may be polyethylene (PE), polyvinyl chloride (PVC) or polypropylene (PP), but the application field of the present disclosure is not limited to these examples merely for illustration.

The following illustrates the clamping mechanism for the industrial input/output device, in accordance with a second embodiment mode of the present disclosure.

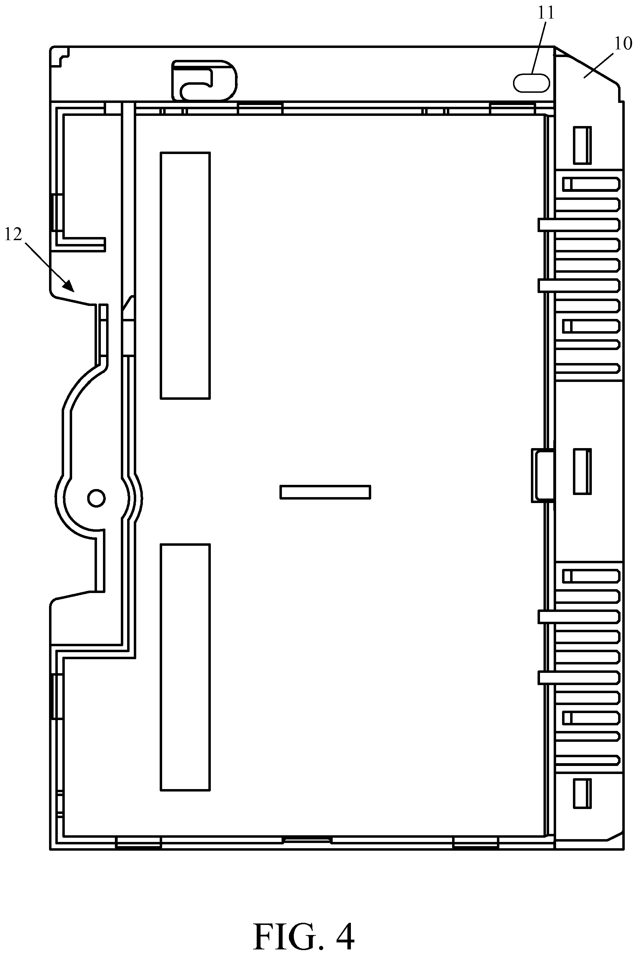

Please refer to FIG. 4, which is a plan view of the interior of a shell member of a clamping mechanism for an industrial input/output device, in accordance with a second embodiment mode of the present disclosure.

The shell member 10 includes a sliding track 11 disposed at a top side thereof and a mechanism assembly receiving space 12 at a rear side thereof.

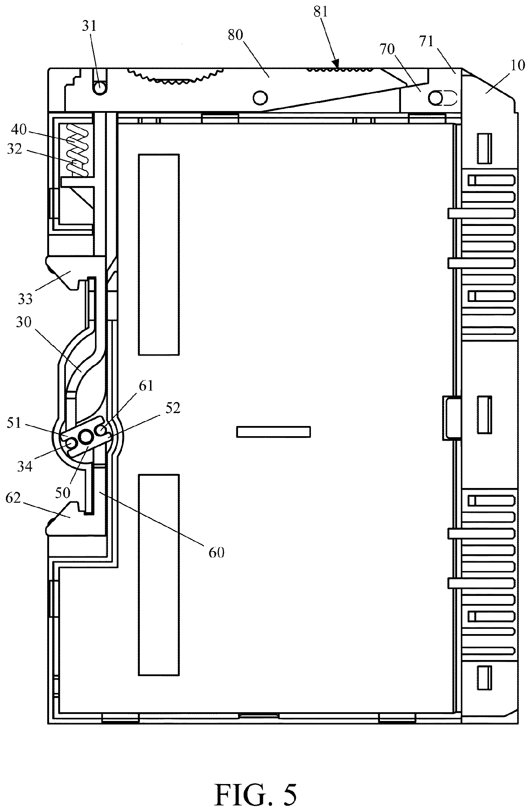

Please refer to FIG. 5, which is a plan view of a mechanism assembly of the clamping mechanism for the industrial input/output device, in accordance with the second embodiment mode of the present disclosure.

A first operating link 70 includes a first operating part 71 which is exposed out of the shell member 10 and disposed on the sliding track 11 of the shell member 10, so that the first operating link 70 is slidable along the sliding track 11 of the shell member 10.

A second operating link 80 includes a second operating part 81 which is exposed out of the shell member 10. The second operating link 80 is pivotally connected with the top side of the shell member 10. The first operating link 70 can be pushed or pulled out of the shell member 10 to release the constraint for rotation of the second operating link 80, that is, when the first operating link 70 is pushed out of the shell member 10, the second operating link 80 becomes rotatable relative to the shell member 10, and when the first operating link 70 is inserted into the shell member 10, the second operating link 80 becomes non-rotatable relative to the shell member 10.

The first clamping rod 30 is disposed in the mechanism assembly receiving space 12 of the shell member 10, and the first clamping rod 30 includes a first driving part 31, an elastic element mounting part 32, a first clamping part 33 and a second driving part 34. The first driving part 31 of the first clamping rod 30 is pivotally connected to the operating link 80, so that the first driving part 31 of the first clamping rod 30 can be driven to move by the operating link 80. A part of the first clamping part 33 of the first clamping rod 30 is exposed out of the shell member 10, and the exposed part of the first clamping part 33 of the first clamping rod 30 is used to clamp the industrial input/output device on the DIN rail.

An elastic element 40 is secured in the mechanism assembly receiving space 12 of the shell member 10 by the elastic element mounting part 32 of the first clamping rod 30, and configured to provide a clamping force to enable the first clamping rod 30 to clamp the industrial input/output device on the DIN rail.

The rotary rod 50 is pivotally disposed in the mechanism assembly receiving space 12 of the shell member 10, and includes a first rotary driving part 51 and a second rotary driving part 52. The second driving part 34 of the first clamping rod 30 is assembled with the first rotary driving part 51 of the rotary rod 50, so that the rotary rod 50 can be driven to rotate by the movement of the first clamping rod 30.

The second clamping rod 60 is disposed in the mechanism assembly receiving space 12 of the shell member 10, and includes a third driving part 61 and a second clamping part 62. The third driving part 61 of the second clamping rod 60 is assembled with the second rotary driving part 52 of the rotary rod 50, so that the second clamping rod 60 can be driven to move by rotation of the rotary rod 50. A part of the second clamping part 62 of the second clamping rod 60 is exposed out of the shell member 10, and the exposed part of the second clamping part 62 is used to clamp the industrial input/output device on the DIN rail.

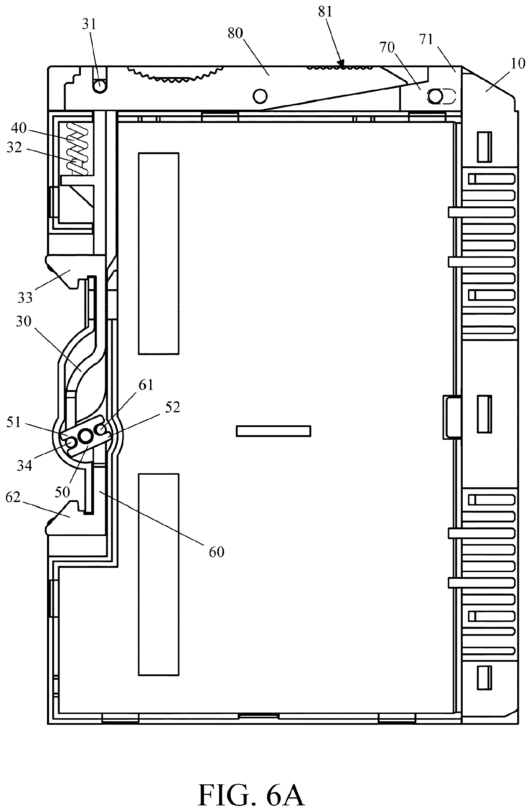

Please refer to FIGs. 6A-6C, which are plan views showing a process of operating the clamping mechanism for the industrial input/output device, in accordance with the second embodiment mode of the present disclosure.

FIG. 6A shows a default state of the clamping mechanism for the industrial input/output device. In the default state, the first operating link 70 is inserted in the shell member 10, and the second operating link 80 is non-rotatable subject to constraint of the first operating link 70. The elastic element 40 exerts downward elastic force on the first clamping part 33 to expose the part of the first clamping part 33 of the first clamping rod 30 out of the shell member 10; at the same time, the part of the second clamping part 62 of the second clamping rod 60 is also exposed out of the shell member 10 because of linking relationship of entire mechanism. As a result, while being exerted by the downward elastic force of the elastic element 40, the first clamping part 33 of the first clamping rod 30 and the second clamping part 62 of the second clamping rod 60 can clamp the industrial input/output device on the DIN rail.

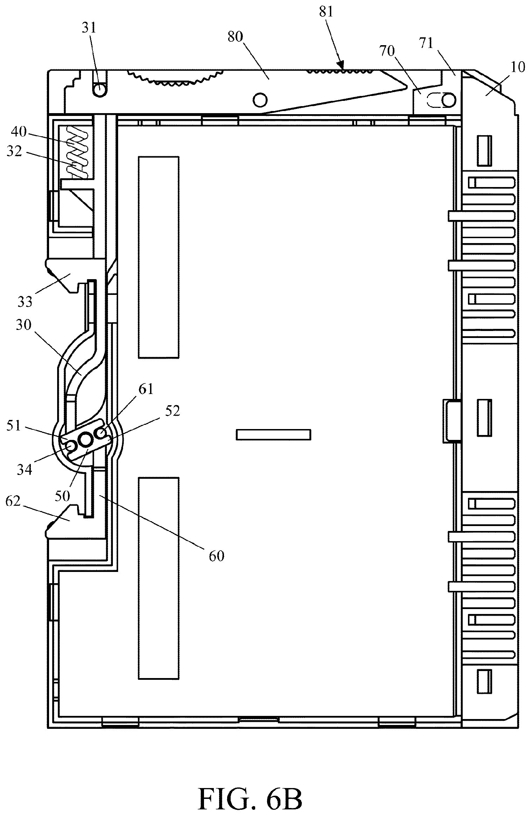

Please refer to FIG. 6B. In order to clamp the industrial input/output device on the DIN rail or unload the industrial input/output device from the DIN rail, the first operating part 71 of the first operating link 70 can be operated to push or pull the first operating link 70 out of the shell member 10, thereby releasing the constraint for rotation of the second operating link 80.

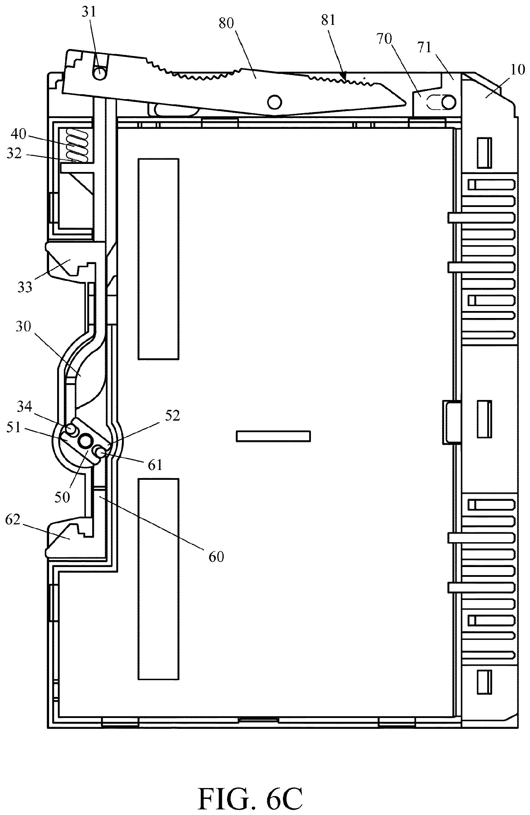

Please refer to FIG. 6C. When the second operating part 81 of the second operating link 80 is pressed down, the second operating link 80 is rotated clockwise relative to the shell member 10, and the first driving part 31 of the first clamping rod 30 drives the first clamping rod 30 to move upwardly, so that the first clamping part 33 of the first clamping rod 30 is moved into the shell member 10. By upwardly moving the second driving part 34 of the first clamping rod 30 to drive clockwise rotation of the rotary rod 30 to move the second clamping rod 60 downwardly, the second clamping part 62 of the second clamping rod 60 can be moved into the shell member 10, thereby clamping the industrial input/output device on the DIN rail or unloading the industrial input/output device from the DIN rail.

After the second operating part 81 of the second operating link 80 is stopped pressing down, the first clamping rod 30 is pushed to move downwardly by the downward elastic force of the elastic element 40, so as to expose the part of the first clamping part 33 of the first clamping rod 30 out of the shell member 10, and at this time, the second operating link 80 is counter-clockwise rotated by downward movement of the first driving part 31 of the first clamping rod 30. When the second driving part 34 of the first clamping rod 30 is moved downwardly to drive the rotary rod 50 to counter-clockwise rotate, the second clamping rod 60 can be driven to move upwardly to expose the part of the second clamping part 62 out of the shell member 10. Subject to the downward elastic force of the elastic element 40, the first clamping part 33 of the first clamping rod 30 and the second clamping part 62 of the second clamping rod 60 can clamp the industrial input/output device on the DIN rail, as shown in FIG. 6B.

Next, the first operating part 71 of the first operating link 70 can be operated to insert the first operating link 70 into the shell member 10, so that the first operating link 70 can limit rotation of the second operating link 80, that is, the second operating link 80 is unable to rotate relative to the shell member 10.

Preferably, the shell member 10, the first operating link 70, the second operating link 80, the first clamping rod 30, the elastic element 40, the rotary rod 50 and the second clamping rod 60 are made of metal material or polymer material, and for example, the metal material may be iron, steel, or aluminum alloy; the polymer material may be polyethylene, polyvinyl chloride, or polypropylene, but the application field of the present disclosure is not limited to these examples which are merely for exemplary illustration.

To summarize, the difference between the present disclosure and the conventional technology is that the operating link of the clamping mechanism of the present disclosure can be slid and rotated to drive links of the mechanism gearings disposed inside the shell member to act simultaneously, thereby clamping the industrial input/output device on the DIN rail or unloading the industrial input/output device from the DIN rail conveniently and fast.

The technical means of the present disclosure can solve the conventional technology problem that it is inconvenient to secure the industrial input/output device on the DIN rail, and further achieve the technical effect of clamping the industrial input/output device on the DIN rail or unloading the industrial input/output device from the DIN rail fast and conveniently.

The present disclosure disclosed herein has been described by means of specific embodiments. However, numerous modifications, variations and enhancements can be made thereto by those skilled in the art without departing from the scope of the invention set forth in the claims.

## Claims

1. A clamping mechanism for clamping an industrial input/output device on a DIN rail, comprising:
a shell member (10), comprising a mechanism assembly receiving space (12) formed at a rear side thereof,
a first clamping rod (30) disposed in the mechanism assembly receiving space, and comprising a first driving part (31), an elastic element mounting part (32), a first clamping part (33) and a second driving part (34), and a part of the first clamping part (33) is exposed out of the shell member (10);
an elastic element (40) secured in the mechanism assembly receiving space through the elastic element mounting part (32);
a rotary rod (50) pivotally disposed in the mechanism assembly receiving space, and comprising a first rotary driving part (51) and a second rotary driving part (52), wherein the second driving part (34)
is assembled with the first rotary driving part (51); and
a second clamping rod (60) disposed in the mechanism assembly receiving space, and comprising a third driving part (61) and a second clamping part (62), wherein the third driving part (61) is assembled with the second rotary driving part (52), and a part of the second clamping part (62) is exposed out of the shell member (10), **characterized in that** the shell member (10) further comprises a sliding track (11) disposed at a top side thereof, the sliding track (11) comprising a first sliding track end (111) and a second sliding track end (112); an operating link (20) comprising a pivot pin (21), a rod sliding slot (22), a first operating part (23) and a second operating part (24), and slidably and rotatably disposed on the sliding track (11) through the pivot pin (21), wherein the first operating part (23) and the second operating part (24) are exposed out of the shell member (10), and the rod sliding slot (22) comprises a first sliding slot end (221) and a second sliding slot end (222); wherein the first driving part (31) of the first clamping rod (30) is disposed in the rod sliding slot (22) and slidable relative to the rod sliding slot (22).

2. The clamping mechanism according to claim 1, **characterized in that** a surface of the first operating part (23) is in a wave shape.

3. The clamping mechanism according to claim 1, wherein the first operating part (23) is operated to slide the pivot pin (21) to the second sliding track end (112) and slide the first driving part (31) to the first sliding slot end (221), and after the second operating part (24) is pressed down, the operating link (20) is rotated relative to the shell member (10) to move the first clamping rod (30), thereby moving the first clamping part (33) into the shell member (10), and the second driving part (34) drives the rotary rod (50) to rotate to move the second clamping rod (63), thereby moving the second clamping part (62) into the shell member (10), so as to unload the industrial input/output device from the DIN rail.

4. The clamping mechanism according to claim 3, **characterized in that** when the second operating part (24) is stopped being pressed down, the first clamping rod (30) is pushed by elastic force of the elastic element (40), so that the part of the first clamping part (33) is exposed out of the shell member (10) and the operating link (20) is reversely rotated relative to the shell member (10), and the second driving part (34) drives the rotary rod (50) to reversely rotate, the second clamping rod (60) is moved to expose the part of the second clamping part (62) out of the shell member (10), so that the industrial input/output device is clamped on the DIN rail, wherein the first operating part (23) is operated to slide the pivot pin (21) to the first sliding track end (111) and slide the first driving part (31) to the second sliding slot end (222), so that the operating link (20) is unable to rotate relative to the shell member (10).

5. The clamping mechanism according to claim 1, **characterized in that** the shell member (10), the operating link (20), the first clamping rod (30), the elastic element (40), the rotary rod (50) and the second clamping rod (60) are made of metal material or polymer material.

6. A clamping mechanism for clamping an industrial input/output device on a DIN rail, comprising:
a shell member (10) comprising a mechanism assembly receiving space (12) formed at a rear side thereof;
a first clamping rod (30) disposed in the mechanism assembly receiving space (12), and comprising a first driving part (31), an elastic element mounting part (32), a first clamping part (33) and a second driving part (34), and a part of the first clamping part (33) is exposed out of the shell member (10);
an elastic element (40) secured in the mechanism assembly receiving space (12) by the elastic element mounting part (32);
a rotary rod (50) pivotally disposed in the mechanism assembly receiving space (12), and comprising a first rotary driving part (51) and a second rotary driving part (52), wherein the second driving part (34) is assembled with the first rotary driving part (51); and
a second clamping rod (60) disposed in the mechanism assembly receiving space (12), and comprising a third driving part (61) and a second clamping part (62), wherein the third driving part (61) is assembled with the second rotary driving part (52), and a part of the second clamping part (62) is exposed out of the shell member (10), **characterized in that** the shell member (10) further comprises a sliding track (11) disposed at a top side thereof, a first operating link (70) comprising a first operating part (71) exposed out of the shell member (10), and disposed in the sliding track (11) and slidable relative to the sliding track (11); a second operating link (80) comprising a second operating part (81) exposed out of the shell member (10), and the second operating link (80) pivotally connected with the top side of the shell member (10); and the first driving part (31) pivotally connected to the second operating link (80), so that the first driving part (31) can be driven to move by the second operating link (80).

7. The clamping mechanism according to claim 6, **characterized in that** the first operating part (71) is operated to slide the first operating link (70) out of the shell member (10), so as to release constraint for rotation of the second operating link (80), and when the second operating part (81) is pressed down to rotate the second operating link (80) relative to the shell member (10), the first clamping rod (30) is driven to move the first clamping part (33) into the shell member (10), and the rotary rod (50) is driven to rotate by the second driving part (34), thereby driving the second clamping rod (60) to move the second clamping part (62) into the shell member (10), so that the industrial input/output device is unloaded from the DIN rail.

8. The clamping mechanism according to claim 7,
**characterized in that** when the second operating part (81) is stopped being pressed down, the first clamping rod (30) is pushed by elastic force of the elastic element (40) to expose the part of the first clamping part (33) out of the shell member (10) and reversely rotate the second operating link (80) relative to the shell member (10), and the second driving part (34) drives the rotary rod (50) to reversely rotate to move the second clamping rod (60), thereby exposing the part of the second clamping part (62) out of the shell member (10), so that the industrial input/output device is clamped on the DIN rail, and the first operating part (71) is then operated to slide the first operating link (70) into the shell member (10), thereby locking the second operating link (80), so that the second operating link (10) is unable to rotate relative to the shell member.

9. The clamping mechanism according to claim 6, **characterized in that** the shell member (10), the first operating link (70), the second operating link (80), the first clamping rod (30), the elastic element (40), the rotary rod (50) and the second clamping rod (60) are made of metal material or polymer material.

## Patentansprüche

1. Klemmmechanismus zum Klemmen einer industriellen Eingabe-/Ausgabeeinrichtung auf eine DIN-Schiene, welcher umfasst:
ein Schalenelement (10), das einen Mechanismusaufbau-Aufnahmeraum (12) umfasst, der an einer Hinterseite ausgebildet ist;
eine erste Klemmstange (30), die in dem Mechanismusaufbau-Aufnahmeraum angeordnet ist, und ein erstes Antriebsteil (31), ein Befestigungsteil für das elastische Element (32), ein erstes Klemmteil (33) und ein zweites Antriebsteil (34) umfasst, worin ein Teil des ersten Klemmteils (33) aus dem Schalenelement (10) freiliegt;
ein elastisches Element (40), das in dem Mechanismusaufbau-Aufnahmeraum durch das Befestigungsteil des elastischen Elements (32) gesichert ist;
eine Drehstange (50), die in dem Mechanismusaufbau-Aufnahmeraum drehbar angeordnet ist, und ein erstes Dreh-Antriebsteil (51) und ein zweites Dreh-Antriebsteil (52) umfasst, worin das zweite Antriebsteil (34) mit dem ersten Dreh-Antriebsteil (51) montiert ist; und
eine zweite Klemmstange (60), die in dem Mechanismusaufbau-Aufnahmeraum angeordnet ist, und ein drittes Antriebsteil (61) und ein zweites Klemmteil (62) umfasst, worin das dritte Antriebsteil (61) mit dem zweiten Dreh-Antriebsteil (52) montiert ist, und ein Teil des zweiten Klemmteils (62) aus dem Schalenelement (10) freiliegt, **dadurch gekennzeichnet, dass** das Schalenelement (10) weiter eine erste Gleitspur (11) umfasst, die an einer Oberseite angeordnet ist, worin die Gleitspur (11) ein erstes Gleitspurende (111) und ein zweites Gleitspurende (112) umfasst;
eine arbeitende Verbindung (20), die einen Schwenkzapfen (21), einen Stangengleitschlitz (22), ein erstes Betriebsteils (23) und ein zweites Betriebsteils (24) umfasst, und durch den Schwenkzapfen (21) gleitend und drehbar auf der Gleitspur (11) angeordnet ist, worin das erste Betriebsteils (23) und das zweite Betriebsteils (24) aus dem Schalenelement (10) heraus freiliegen, worin der Stangengleitschlitz (22) ein erstes Gleitschlitzende (221) und ein zweites Gleitschlitzende (222) umfasst; worin das erste Antriebsteil (31) der ersten Klemmstange (30) in dem Stangengleitschlitz (22) angeordnet und relativ zu dem Stangengleitschlitz (22) gleitend angeordnet ist.

2. Klemmmechanismus nach Anspruch 1, **dadurch gekennzeichnet, dass** eine Oberfläche des ersten Betriebsteils (23) eine Wellenform aufweist.

3. Klemmmechanismus nach Anspruch 1, wobei das erste Betriebsteil (23) betrieben wird, den Schwenkzapfen (21) zu dem zweiten Gleitspurende (112) und das erste Antriebsteil (31) zu dem ersten Gleitschlitzende (221) zu gleiten, und nachdem das zweite Betriebsteil (24) herabgedrückt wurde, die arbeitende Verbindung (20) relativ zu dem Schalenelement (10) gedreht wird, um die erste Klemmstange (30) zu bewegen, wodurch sich das erste Klemmteil (33) in das Schalenelement (10) bewegt, und das zweite Antriebsteil (34) die Drehstange (50) zum Drehen antreibt, um die zweite Klemmstange (63) zu bewegen, wodurch das zweite Klemmteil (62) in das Schalenelement (10) bewegt wird, um so die industrielle Eingabe-/Ausgabeeinrichtung von der DIN-Schiene zu entfernen.

4. Klemmmechanismus nach Anspruch 3, **dadurch gekennzeichnet, dass** wenn das zweite Betriebsteil (24) nicht mehr heruntergedrückt wird, die erste Klemmstange (30) durch die elastische Kraft des elastischen Elements (40) gedrückt wird, so dass der Teil des ersten Klemmteils (33) aus dem Schalenelement (10) freigelegt wird und die arbeitende Verbindung (20) relativ zu dem Schalenelement (10) zurück gedreht wird, wobei das zweite Antriebsteil (34) die Drehstange (50) antreibt, sich rückwärts zu drehen, wobei die zweite Klemmstange (60) bewegt wird, den Teil des zweiten Klemmteils (62) aus dem Schalenelement (10) freizulegen, so dass die industrielle Eingabe-/Ausgabeeinrichtung auf die DIN-Schiene geklemmt wird, wobei das erste Betriebsteil (23) betrieben wird, den Schwenkzapfen (21) zu dem ersten Gleitspurende (111) und das erste Antriebsteil (31) zu dem zweiten Gleitschlitzende (222) zu gleiten, so dass die arbeitende Verbindung (20) sich nicht relativ zu dem Schalenelement (10) drehen kann.

5. Klemmmechanismus nach Anspruch 1, **dadurch gekennzeichnet, dass** das Schalenelement (10), die arbeitende Verbindung (20), die erste Klemmstange (30), das elastische Element (40), die Drehstange (50) und die zweite Klemmstange (60) aus einem Metallmaterial oder einem Polymermaterial gefertigt sind.

6. Klemmmechanismus zum Klemmen einer industriellen Eingabe-/Ausgabeeinrichtung auf einer DIN-Schiene, welcher umfasst:
ein Schalenelement (10), das einen Mechanismusaufbau-Aufnahmeraum (12) umfasst, der an einer Hinterseite ausgebildet ist;
eine erste Klemmstange (30), die in dem Mechanismusaufbau-Aufnahmeraum (12) angeordnet ist, und ein erstes Antriebsteil (31), ein Befestigungsteil für ein elastisches Element (32), ein erstes Klemmteil (33) und ein zweites Antriebsteil (34) umfasst, worin ein Teil des ersten Klemmteils (33) aus dem Schalenelement (10) freiliegt;
ein elastisches Element (40), das durch das Befestigungsteil des elastischen Elements (32) in dem Mechanismusaufbau-Aufnahmeraum (12) gesichert ist;
eine Drehstange (50), die in dem Mechanismusaufbau-Aufnahmeraum (12) schwenkbar angeordnet ist, und ein erstes Dreh-Antriebsteil (51) und ein zweites Dreh-Antriebsteil (52) umfasst, worin das zweite Antriebsteil (34) mit dem ersten Dreh-Antriebsteil (51) montiert ist; und
eine zweite Klemmstange (60), die in dem Mechanismusaufbau-Aufnahmeraum (12) angeordnet ist, und ein drittes Antriebsteil (61) und ein zweites Klemmteil (62) umfasst, worin das dritte Antriebsteil (61) mit dem zweiten Dreh-Antriebsteil (52) montiert ist, und ein Teil des zweiten Klemmteils (62) aus dem Schalenelement (10) freiliegt;
**dadurch gekennzeichnet, dass** das Schalenelement (10) weiter, eine Gleitspur (10) umfasst, die an einer Oberseite angeordnet ist, worin eine erste arbeitende Verbindung (70), ein erstes Betriebsteil (71) umfasst, das aus dem Schalenelement (10) freiliegt, und in der Gleitspur (11) angeordnet und relativ zu der Gleitspur (11) gleitfähig ist;
eine zweite arbeitende Verbindung (80), die ein zweites Betriebsteil (81) umfasst, das aus dem Schalenelement (10) freiliegt, worin die zweite arbeitende Verbindung (80) mit der Oberseite des Schalenelements (10) schwenkbar verbunden ist; und worin das erste Antriebsteil (31) mit der zweiten arbeitenden Verbindung (80) schwenkbar verbunden ist, so dass das erste Antriebsteil (31) durch die zweite arbeitende Verbindung (80) zum Bewegen angetrieben werden kann.

7. Klemmmechanismus nach Anspruch 6, **dadurch gekennzeichnet, dass** das erste Betriebsteil (71) betrieben wird die erste arbeitende Verbindung (70) aus dem Schalenelement (10) zu gleiten, um die Beschränkung der Drehung der zweiten arbeitenden Verbindung (80) zu lösen, wobei wenn das zweite Betriebsteil (81) heruntergedrückt wird, um die zweite arbeitende Verbindung (80) relativ zu dem Schalenelement (10) zu drehen, die erste Klemmstange (30) angetrieben wird, das erste Klemmteil (33) in das Schalenelement (10) zu bewegen, und die Drehstange (50) durch das zweite Antriebsteil (34) zum Drehen angetrieben wird, wodurch die zweite Klemmstange (60) angetrieben wird, das zweite Klemmteil (62) in das Schalenelement (10) zu bewegen, so dass die industrielle Eingabe-/Ausgabeeinrichtung von der DIN-Schiene entfernt werden kann.

8. Klemmmechanismus nach Anspruch 7, **dadurch gekennzeichnet, dass** wenn das zweite Betriebsteil (81) nicht mehr herabgedrückt wird, die erste Klemmstange (30) durch die elastische Kraft des elastischen Elements (40) gedrückt wird, den Teil des ersten Klemmteils (33) aus dem Schalenelement (10) freizulegen und die zweite arbeitende Verbindung (80) relativ zu dem Schalenelement (10) rückwärts zu drehen, und das zweite Antriebsteil (34) die Drehstange (50) antreibt, sich rückwärts zu drehen, um die zweite Klemmstange (60) zu bewegen, wodurch der Teil des zweiten Klemmteils (62) aus dem Schalenelement (10) freigelegt wird, so dass die industrielle Eingabe-/Ausgabeeinrichtung auf die DIN-Schiene geklemmt wird, wobei sodann das erste Betriebsteil (71) betreiben wird, die erste arbeitende Verbindung (70) in das Schalenelement (10) zu gleiten, wodurch die zweite arbeitende Verbindung (80) blockiert wird, so dass die zweite arbeitende Verbindung (10) sich nicht relativ zu dem Schalenelement drehen kann.

9. Klemmmechanismus nach Anspruch 6, **dadurch gekennzeichnet, dass** das Schalenelement (10), die erste arbeitende Verbindung (70), die zweite arbeitende Verbindung (80), die erste Klemmstange (30), das elastische Element (40), die Drehstange (50) und die zweite Klemmstange (60) aus einem Metallmaterial oder einem Polymermaterial gefertigt sind.

## Revendications

1. Mécanisme de serrage pour serrer un dispositif industriel d'entrée/sortie sur un rail DIN, comprenant :
un élément de coque (10), comprenant un espace de réception (12) d'ensemble mécanisme formé sur un côté arrière correspondant,
une première tige de serrage (30) disposée dans l'espace de réception d'ensemble mécanisme et comprenant une première partie d'entraînement (31), une partie de montage (32) d'élément élastique, une première partie de serrage (33) et une deuxième partie d'entraînement (34) et une partie de la première partie de serrage (33) est apparente à l'extérieur de l'élément de coque (10) ;
un élément élastique (40) fixé dans l'espace de réception d'ensemble mécanisme par l'intermédiaire de la partie de montage (32) d'élément élastique ;
une tige rotative (50) disposée de manière pivotante dans l'espace de réception d'ensemble mécanisme et comprenant une première partie d'entraînement en rotation (51) et une deuxième partie d'entraînement en rotation (52), la deuxième partie d'entraînement (34) étant assemblée avec la première partie d'entraînement en rotation (51) ; et
une deuxième tige de serrage (60) disposée dans l'espace de réception d'ensemble mécanisme et comprenant une troisième partie d'entraînement (61) et une deuxième partie de serrage (62), la troisième partie d'entraînement (61) étant assemblée avec la deuxième partie d'entraînement en rotation (52) et une partie de la deuxième partie de serrage (62) étant apparente à l'extérieur de l'élément de coque (10), **caractérisé en ce que** l'élément de coque (10) comprend en outre une piste de coulissement (11) disposée sur un côté supérieur correspondant, la piste de coulissement (11) comprenant une première extrémité (111) de piste de coulissement et une deuxième extrémité (112) de piste de coulissement ; une liaison d'actionnement (20) comprenant un axe de pivotement (21), une fente de coulissement de tige (22), une première partie d'actionnement (23) et une deuxième partie d'actionnement (24) et disposée de manière coulissante et rotative sur la piste de coulissement (11) par l'intermédiaire de l'axe de pivotement (21), la première partie d'actionnement (23) et la deuxième partie d'actionnement (24) étant apparentes à l'extérieur de l'élément de coque (10) et la fente de coulissement de tige (22) comprenant une première extrémité de fente de coulissement (221) et une deuxième extrémité de fente de coulissement (222) ; la première partie d'entraînement (31) de la première tige de serrage (30) étant disposée dans la fente de coulissement de tige (22) et pouvant coulisser par rapport à la fente de coulissement de tige (22).

2. Mécanisme de serrage selon la revendication 1, **caractérisé en ce qu'**une surface de la première partie d'actionnement (23) est en forme d'onde.

3. Mécanisme de serrage selon la revendication 1, la première partie d'actionnement (23) étant actionnée pour faire coulisser l'axe de pivotement (21) vers la deuxième extrémité (112) de piste de coulissement et pour faire coulisser la première partie d'entraînement (31) vers la première extrémité de fente de coulissement (221) et après le pressage de la deuxième partie d'actionnement (24) vers le bas, la liaison d'actionnement (20) est tournée par rapport à l'élément de coque (10) pour déplacer la première tige de serrage (30), déplaçant ainsi la première partie de serrage (33) dans l'élément de coque (10), et la deuxième partie d'entraînement (34) entraîne la tige rotative (50) en rotation pour déplacer la deuxième tige de serrage (63), déplaçant ainsi la deuxième partie de serrage (62) dans l'élément de coque (10), de façon à décharger le dispositif industriel d'entrée/sortie du rail DIN.

4. Mécanisme de serrage selon la revendication 3, **caractérisé en ce que**, lorsque la deuxième partie d'actionnement (24) est arrêtée tout en étant pressée vers le bas, la première tige de serrage (30) est poussée par une force élastique de l'élément élastique (40), de sorte que la partie de la première partie de serrage (33) est apparente à l'extérieur de l'élément de coque (10) et la liaison d'actionnement (20) est tournée en sens inverse par rapport à l'élément de coque (10) et la deuxième partie d'entraînement (34) entraîne la tige rotative (50) pour tourner en sens inverse, la deuxième tige de serrage (60) est déplacée pour faire apparaître la partie de la deuxième partie de serrage (62) à l'extérieur de l'élément de coque (10), de telle sorte que le dispositif industriel d'entrée/sortie est serré sur le rail DIN, la première partie d'actionnement (23) étant actionnée pour faire coulisser l'axe de pivotement (21) vers la première extrémité (111) de piste de coulissement et pour faire coulisser la première partie d'entraînement (31) vers la deuxième extrémité de fente de coulissement (222), de telle sorte que la liaison d'actionnement (20) ne peut pas tourner par rapport à l'élément de coque (10).

5. Mécanisme de serrage selon la revendication 1, **caractérisé en ce que** l'élément de coque (10), la liaison d'actionnement (20), la première tige de serrage (30), l'élément élastique (40), la tige rotative (50) et la deuxième tige de serrage (60) sont constitués d'un matériau métallique ou d'un matériau polymère.

6. Mécanisme de serrage pour serrer un dispositif industriel d'entrée/sortie sur un rail DIN, comprenant :
un élément de coque (10) comprenant un espace de réception (12) d'ensemble mécanisme formé sur un côté arrière correspondant ;
une première tige de serrage (30) disposée dans l'espace de réception (12) d'ensemble mécanisme et comprenant une première partie d'entraînement (31), une partie de montage (32) d'élément élastique, une première partie de serrage (33) et une deuxième partie d'entraînement (34) et une partie de la première partie de serrage (33) est apparente à l'extérieur de l'élément de coque (10) ;
un élément élastique (40) fixé dans l'espace de réception (12) d'ensemble mécanisme par la partie de montage (32) d'élément élastique ;
une tige rotative (50) disposée de manière pivotante dans l'espace de réception (12) d'ensemble mécanisme et comprenant une première partie d'entraînement en rotation (51) et une deuxième partie d'entraînement en rotation (52), la deuxième partie d'entraînement (34) étant assemblée avec la première partie d'entraînement en rotation (51) ; et
une deuxième tige de serrage (60) disposée dans l'espace de réception (12) d'ensemble mécanisme et comprenant une troisième partie d'entraînement (61) et une deuxième partie de serrage (62), la troisième partie d'entraînement (61) étant assemblée avec la deuxième partie d'entraînement en rotation (52) et une partie de la deuxième partie de serrage (62) étant apparente à l'extérieur de l'élément de coque (10), **caractérisé en ce que** l'élément de coque (10) comprend en outre une piste de coulissement (11) disposée sur un côté supérieur correspondant, une première liaison d'actionnement (70) comprenant une première partie d'actionnement (71) apparente à l'extérieur de l'élément de coque (10) et disposée dans la piste de coulissement (11) et pouvant coulisser par rapport à la piste de coulissement (11) ; une deuxième liaison d'actionnement (80) comprenant une deuxième partie d'actionnement (81) apparente à l'extérieur de l'élément de coque (10) et la deuxième liaison d'actionnement (80) étant reliée de manière pivotante avec le côté supérieur de l'élément de coque (10) ; et la première partie d'entraînement (31) étant reliée de manière pivotante à la deuxième liaison d'actionnement (80), de telle sorte que la première partie d'entraînement (31) peut être entraînée en déplacement par la deuxième liaison d'actionnement (80).

7. Mécanisme de serrage selon la revendication 6, **caractérisé en ce que** la première partie d'actionnement (71) est actionnée pour faire coulisser la première liaison d'actionnement (70) hors de l'élément de coque (10), de façon à libérer une contrainte de rotation de la deuxième liaison d'actionnement (80) et, lorsque la deuxième partie d'actionnement (81) est pressée vers le bas pour faire tourner la deuxième liaison d'actionnement (80) par rapport à l'élément de coque (10), la première tige de serrage (30) est entraînée pour déplacer la première partie de serrage (33) dans l'élément de coque (10) et la tige rotative (50) est entraînée en rotation par la deuxième partie d'entraînement (34), entraînant ainsi la deuxième tige de serrage (60) pour déplacer la deuxième partie de serrage (62) dans l'élément de coque (10), de telle sorte que le dispositif industriel d'entrée/sortie est déchargé du rail DIN.

8. Mécanisme de serrage selon la revendication 7, **caractérisé en ce que**, lorsque la deuxième partie d'actionnement (81) est arrêtée tout en étant pressée vers le bas, la première tige de serrage (30) est poussée par une force élastique de l'élément élastique (40) pour faire apparaître la partie de la première partie de serrage (33) à l'extérieur de l'élément de coque (10) et faire tourner en sens inverse la deuxième liaison d'actionnement (80) par rapport à l'élément de coque (10) et la deuxième partie d'entraînement (34) entraîne la tige rotative (50) en rotation inverse pour déplacer la deuxième tige de serrage (60), faisant ainsi apparaître la partie de la deuxième partie de serrage (62) à l'extérieur de l'élément de coque (10), de telle sorte que le dispositif industriel d'entrée/sortie est serré sur le rail DIN et la première partie d'actionnement (71) est ensuite actionnée pour faire coulisser la première liaison d'actionnement (70) dans l'élément de coque (10), verrouillant ainsi la deuxième liaison d'actionnement (80), de telle sorte que la deuxième liaison d'actionnement (10) ne peut pas tourner par rapport à l'élément de coque.

9. Mécanisme de serrage selon la revendication 6, **caractérisé en ce que** l'élément de coque (10), la première liaison d'actionnement (70), la deuxième liaison d'actionnement (80), la première tige de serrage (30), l'élément élastique (40), la tige rotative (50) et la deuxième tige de serrage (60) sont constitués d'un matériau métallique ou d'un matériau polymère.
